# EUROPÄISCHE PATENTSCHRIFT

(11) **EP 3 847 517 B1**
(45) Veröffentlichungstag und Bekanntmachung des Hinweises auf die Patenterteilung: **14.09.2022**
(21) Anmeldenummer: 19801723.8
(22) Anmeldetag: 30.10.2019
(51) Int. Cl.: G05B 19/418, G05B 13/02, G03F 7/20

(54) **VERFAHREN UND VORRICHTUNG ZUR HERSTELLUNG EINES PRODUKTS SOWIE COMPUTERPROGRAMMPRODUKT**
METHOD AND DEVICE AND METHOD FOR PRODUCING A PRODUCT AND COMPUTER PROGRAM PRODUCT
PROCÉDÉ ET DISPOSITIF DE FABRICATION D'UN PRODUIT AINSI QUE PRODUIT PROGRAMME D'ORDINATEUR

(30) Priorität: 11.12.2018 EP 18211722
(43) Veröffentlichungstag der Anmeldung: 14.07.2021
(73) Patentinhaber: Siemens Aktiengesellschaft, 80333 München (DE)
(72) Erfinder: LIATSA, Athina, 91074 Herzogenaurach (DE); MITTERMEIER, Thomas, 90459 Nürnberg (DE); OCHSENFELD, Henning, 90491 Nürnberg (DE); PETTIGREW, Liam, Petersham, NSW 204 (AU)
(86) Internationale Anmeldenummer: PCT/EP2019/079624
(87) Internationale Veröffentlichungsnummer: WO 2020/119999

(56) Entgegenhaltungen:
- WO-A1-2018/150210
- US-A1- 2003 150 909
- US-A1- 2014 064 445
- US-A1- 2017 123 411
- US-A1- 2018 284 091
- US-A1- 2018 292 812
- US-A1- 2018 307 203

## Beschreibung

Die US 2017/123411 A1 offenbart ein Verfahren und ein System zur Analyse von Variationsursachen eines Herstellungsprozesses, um einen Hauptgrund für defekte Produkte zu identifizieren. Dabei wird ein Klassifizierer eingesetzt, um anhand von Herstellungsprozessdaten das jeweils hergestellte Produkt zu klassifizieren.

Die US 2018/284091 A1 beschreibt die Überwachung der Herstellung eines Nahrungsmittelprodukts. Dazu werden Sensordaten (z.B. Bilder) an eine Steuerung übermittelt. Diese Bilder werden mit gespeicherten Daten verglichen, wobei abhängig von diesem Vergleich die Einhaltung eines Qualitätsniveaus bestimmt wird.

Die WO 2018/150210 A1 offenbart die Beurteilung eines hergestellten Halbleitersubstrats, indem ein Bild des Halbleitersubstrats erfasst und ausgewertet wird. Dabei wird auch eine Information über die Qualität des hergestellten Halbleitersubstrats bereitgestellt.

Die US 2018/307203 A1 beschreibt die Bestimmung eines Fehlers bezüglich einer bearbeiteten Oberfläche eines Werkstücks abhängig von einem Prüfergebnis. Dabei kann das Prüfergebnis ein Bildmerkmal des Werkstücks umfassen.

Die US 2018/292812 A1, die US 2014/064445 A1 und die US 2003/150909 A1 beschreiben den technologischen Hintergrund der vorliegenden Erfindung.

Aus dem nächstliegenden Stand der Technik Dokument US 2014/064445 A1 ist ein Röntgensystem bekannt, das stark vergrößerte Bilder von Objekten wie integrierten Schaltungen und Leiterplatten erzeugt. Das System umfasst auch eine Stufe zum Steuern der Position und Ausrichtung des Objekts; ein in unmittelbarer Nähe des Objekts positionierter Szintillator, der Röntgenstrahlen absorbiert und sichtbare Photonen emittiert; ein optisches Abbildungssystem, das ein hochauflösendes, vergrößertes Bild der vom Szintillator emittierten Photonen erzeugt; und einen Detektor, wie z. B. ein CCD-Array, um das Bild in elektronische Signale umzuwandeln. Das Röntgensystem kann auch in Verfahren zur Hochgeschwindigkeitsmetrologie oder -inspektion verwendet werden, die wiederum eine schnelle Prozessentwicklung sowie eine Herstellungsprozesssteuerung und Ertragsverwaltung ermöglichen. Die Bilder und Messungen können verwendet werden, um die Form und die Abmessungen von Lot zu prüfen, das verwendet wird, um Vorrichtungen zu verbinden, und können verwendet werden, um den Herstellungsprozess zu steuern oder fehlerhaftes Material auszusortieren. Das Vorhandensein einiger Lötmuster nach dem Bonden kann verwendet werden, um ungeeignete Lötverbindungen zu erkennen, einschließlich Verbindungen, bei denen das Lötmittel zwischen den beiden Verbindungspunkten nicht durchgehend ist und daher kein nützlicher Strom- oder Wärmeleiter ist. Alternativ können mehrere Lötmittel-Reflow-Prozesse verwendet werden, um Lötverbindungen zu reparieren oder zu verbessern, die auf der Grundlage von Inspektionsergebnissen mit dem System gemäß der Erfindung als nicht konform mit Herstellungs- oder Produktspezifikationen bestimmt werden.

Bei der Herstellung eines Produktes wird in der Regel nach der Herstellung des Produktes und/oder nach einzelnen Produktionsschritten eine Qualitätskontrolle durchgeführt. Die Qualitätskontrolle erfolgt beispielhaft durch ein bildgebendes Verfahren, wobei anhand eines erzeugten Bildes festgestellt wird, ob das hergestellte Produkt den Qualitätsanforderungen entspricht. Insbesondere bei Produkten, bei denen eine Bildgebung von Außenseiten des Produkts nicht ausreichend ist, können Bilder mit Hilfe von Röntgenstrahlung erstellt werden.

Nachteilhaft ist die Qualitätskontrolle oft aufwendig und erfordert zum Teil hohe Sicherheitsstandards. Insbesondere der Einsatz von Röntgenstrahlung ist bei der Qualitätskontrolle nachteilhaft. Überdies stellt eine Qualitätskontrolle einen erheblichen Kostenfaktor dar.

Demnach ist es Aufgabe der Erfindung den Aufwand bei der Herstellung eines Produkts zu verringern.

Die Aufgabe wird durch ein Verfahren nach Anspruch 1 gelöst. Weiter wird die Aufgabe mit Hilfe eines Computerprogrammproduktes nach Anspruch 14 gelöst. Darüber hinaus wird diese Aufgabe durch eine Vorrichtung gemäß Anspruch 15 gelöst.

Vorteilhafte Weiterbildungen der Erfindung sind Gegenstand der abhängigen Ansprüche.

Das Verfahren umfasst zumindest die folgenden Schritte:
- Produktion eines Produktes in einem Produktionsschritt oder in mehreren Produktionsschritten;
- jeweils eine Bereitstellung von Produktionsdaten während zumindest des einen Produktionsschrittes, insbesondere mit Hilfe zumindest eines Sensors;
- Berechnung eines Qualitätsindikators auf Grundlage der jeweiligen Produktionsdaten und Zuweisung des Qualitätsindikators zu dem jeweiligen Produkt.

Unter einem Produkt wird eine mit elektrischen und/oder elektronischen Bauteilen bestückte Leiterplatte verstanden.

Unter einem Produktionsschritt kann unter anderem das Wickeln eines isolierten elektrischen Leiters, der Auftrag einer Lötpaste auf eine Leiterplatte, eine Isolation eines elektrischen Leiters, die Positionierung und/oder die Befestigung von Bauteilen miteinander verstanden werden.

Produktionsdaten sind vorzugsweise:
- Abmessungen des Produkts,
- Position eines Bauteils, insbesondere in Bezug zur Position anderer Bauteile,
- eine Position und oder eine Abweichung von einer Soll-Position eines Befestigungsmittels, wie eines Klebstoffes oder einer Lötpaste,
- Ort und Menge eines Isolationsmittels auf einem elektrischen Leiter,
- eine Festigkeit einer Verbindung zweier Bauteile,
- eine Durchflussmenge,
- eine Drehzahl oder ein Drehmoment.

In Bezug zur Herstellung der Leiterplatte sind Produktionsdaten:
- die Position einer Lötpaste der auf der Leiterplatte,
- die Abweichung der aufgetragenen Lötpaste in Bezug zu einer Soll-Position bzw. einem Soll-Verlauf, die Dicke der aufgetragenen Schicht der Lötpaste,
- und/oder eine Temperatur oder eine Luftfeuchtigkeit der jeweiligen Umgebung des Produktes.

Produktionsdaten können durch einen Sensor ermittelt werden. Alternativ oder zusätzlich können Produktionsdaten anhand von Steuerungsdaten bzw. Steuerungsbefehlen ermittelt werden.

Ein Sensor ist vorzugsweise als Kamera, als Temperatursensor, als Positionssensor, als Abstandssensor, als Vibrationssensor oder als Durchflusssensor ausgebildet.

Der Qualitätsindikator gibt vorzugsweise an, ob das Produkt den Qualitätserfordernissen entspricht. Ein Qualitätsindikator ist vorzugsweise durch "0" oder "1" (in dualer Darstellung) darstellbar. "0" heißt beispielsweise, dass das jeweilige Produkt den Qualitätserfordernissen nicht entspricht und "1" heißt, dass das jeweilige Produkt den Qualitätserfordernissen entspricht.

Der Qualitätsindikator gibt beispielsweise an, ob alle Verbindungen der Bauteile ausreichend ausgebildet sind. Der Qualitätsindikator kann auch angeben, ob ein Produkt nach der Herstellung funktionsfähig sein wird.

Die Berechnung des Qualitätsindikators erfolgt vorzugsweise mit Hilfe eines Computerprogrammprodukts, wobei das Computerprogrammprodukt auf einer Recheneinheit installiert und/oder ausführbar ist.

Die Berechnung des Qualitätsindikators erfolgt auf Grundlage der Produktionsdaten. Vorzugsweise erfolgt die Berechnung mit einem lernfähigen Algorithmus. Alternativ oder zusätzlich kann der Algorithmus auch generische Anteile aufweisen.

Durch die Erfindung kann eine, den Produktionsschritten nachfolgende, Qualitätsprüfung vorteilhaft zumindest teilweise entfallen. Insbesondere kann eine Qualitätskontrolleinheit entlastet oder gar eingespart werden.

Bei einer vorteilhaften Ausgestaltung der Erfindung wird der jeweilige Qualitätsindikator dem jeweiligen Produkt mit Hilfe einer Datenbank oder mit Hilfe einer Markierung auf dem Produkt zugeordnet.

Die Zuordnung des jeweiligen Qualitätsindikators auf dem jeweiligen Produkt kann durch einen QR-Code oder einen Strichcode auf dem Produkt aufgebracht werden. Alternativ oder zusätzlich kann der Qualitätsindikator dem Produkt mit Hilfe eines RFID-Chips zugeordnet werden.

Die Datenbank ist vorzugsweise der Recheneinheit zugeordnet, wobei die Datenbankeinträge für das jeweilige Produkt einen dem Produkt entsprechenden Qualitätsindikator umfassen.

Die Zuweisung des Qualitätsindikators zu dem jeweiligen Produkt dient einer verbesserten Klassifizierung des jeweiligen Produkts.

Bei einer weiteren vorteilhaften Ausgestaltung der Erfindung erfolgt nach zumindest einem Produktionsschritt eine Qualitätskontrolle, wobei bei der Qualitätskontrolle dem jeweiligen Produkt jeweils ein Qualitätsindex zugeordnet wird.

Die Qualitätskontrolle erfolgt vorteilhaft mit einer Qualitätskontrolleinheit. Vorteilhaft erfolgt die Qualitätskontrolle nach Durchlauf der Produktionsschritte.

Durch die Qualitätskontrolle wird dem jeweiligen Produkt ein Qualitätsindex zugeordnet. Der Qualitätsindex gibt an, ob das jeweilige Produkt den Qualitätserfordernissen entspricht. Der Qualitätsindex ist vorteilhaft in einer dualen Darstellung darstellbar. Analog zum Qualitätsindikator kann "0" bedeuten, dass das jeweilige Produkt den Qualitätsanforderungen nicht entspricht. Ein Qualitätsindex gleich "1" kann bedeuten, dass das jeweilige Produkt den Qualitätserfordernissen entspricht.

Durch die Qualitätskontrolle kann die Berechnung des Qualitätsindikators überprüft werden. Insbesondere bei der Berechnung des Qualitätsindikators mit Hilfe eines lernfähigen Algorithmus kann mit Hilfe des Qualitätsindex der lernfähige Algorithmus angelernt und oder verbessert werden.

Durch den Einsatz einer Qualitätskontrolle kann die gleichbleibende Qualität des jeweiligen Produkts selbst bei einem Ausfall der Recheneinheit, die den Qualitätsindikator ermittelt, gesichert werden.

Bei einer weiteren vorteilhaften Ausgestaltung der Erfindung wird der Qualitätsindikator mit Hilfe eines lernfähigen Algorithmus bestimmt, wobei der lernfähige Algorithmus durch Vergleich von Produktionsdaten, den Qualitätsindices und optional dem jeweiligen Qualitätsindikator anlernbar ist.

Ein lernfähiger Algorithmus wird vorteilhaft anhand eines Vergleiches von dem jeweiligen Qualitätsindikator eines Produktes mit dem ermittelten Qualitätsindex desselben Produktes angelernt. Durch den selbstlernenden Algorithmus können eine Vielzahl von unterschiedlichen Produkten mit einem Qualitätsindikator beaufschlagt werden.

Der lernfähige Algorithmus kann vorteilhaft auf einer Recheneinheit ausgeführt werden, wobei die Recheneinheit zumindest einer Produktionseinheit zugeordnet ist.

Eine solche Recheneinheit ist vorzugsweise als EDGE-Device ausgebildet.

Zum Anlernen des lernfähigen Algorithmus dient vorteilhaft eine weitere Recheneinheit. Die weitere Recheneinheit ist vorzugsweise als dezentraler Server, insbesondere als Cloud, ausgebildet. Beim Anlernen erfolgt vorteilhaft ein Vergleich des Qualitätsindikators mit dem Qualitätsindex unter Berücksichtigung der Produktionsdaten.

Durch die Verwendung eines selbstlernenden Algorithmus kann die Berechnung des Qualitätsindikators schrittweise verbessert werden.

Bei einer weiteren vorteilhaften Ausgestaltung der Erfindung wird der lernfähige Algorithmus derart angelernt, dass der jeweilige Qualitätsindikator dem jeweiligen Qualitätsindex des jeweiligen Produktes entspricht.

Der jeweilige Qualitätsindex des jeweiligen Produktes dient zum Anlernen des lernfähigen Algorithmus. Der jeweilige Qualitätsindex wird vorzugsweise von der Qualitätskontrolleinheit bereitgestellt. Durch einen Vergleich des jeweiligen Qualitätsindex mit dem jeweiligen Qualitätsindikator erfolgt ein besonders effizientes Anlernen des lernfähigen Algorithmus.

Vorteilhaft kann das Anlernen unabhängig vom Betrieb der Vorrichtung bzw. des lernfähigen Algorithmus erfolgen. So sind nur minimale Ressourcen der Recheneinheit zur Bestimmung des Produktionsindikators erforderlich.

Bei einer weiteren vorteilhaften Ausgestaltung der Erfindung wird einem Benutzer der Qualitätsindikator und/oder der Qualitätsindex des jeweiligen Produktes angezeigt, wobei der Benutzer anhand des Qualitätsindikators auswählen kann, was mit dem Produkt geschieht.

Vorteilhaft entscheidet ein Benutzer anhand des Qualitätsindikators, ob ein Produkt das jeweilige Qualitätserfordernis erfüllt.

Vorteilhaft erfolgt die Anzeige des Qualitätsindikators des jeweiligen Produktes mit einer Empfehlung, sodass der Benutzer lediglich eine Freigabe erteilt.

Die Entscheidung des Benutzers, ob ein Qualitätserfordernis eines Produktes mit einem bestimmten Qualitätsindikator erfüllt ist, kann auch zum Anlernen des lernfähigen Algorithmus dienen.

Durch den Einbezug des Benutzers kann der Algorithmus zur Berechnung des Qualitätsindikators verbessert werden.

Bei einer weiteren vorteilhaften Ausgestaltung der Erfindung wird anhand des Qualitätsindikators und/oder der Auswahl des Benutzers entschieden, ob eine Qualitätskontrolle des Produktes erfolgt.

Durch den Einbezug des Benutzers kann insbesondere während des Anlernens des Algorithmus die Effizienz der Qualitätskontrolle verbessert werden.

Der Benutzer kann durch seine Eingaben vorteilhaft den lernfähigen Algorithmus unterstützen.

Bei einer weiteren vorteilhaften Ausgestaltung der Erfindung bestimmt zumindest ein Sensor zumindest einen Umwelteinfluss, wobei der Sensor den Umwelteinfluss als Teil der Produktionsdaten bereitstellt.

Neben den Produktionsdaten können Umwelteinflüsse auf die Qualität des jeweiligen Produktes einwirken.

Umwelteinflüsse sind beispielhaft:
- Umgebungstemperatur,
- Luftfeuchtigkeit,
- Vibrationen oder Erschütterungen.

Der jeweilige Umwelteinfluss wird vorteilhaft mit einem Sensor ermittelt, der der jeweiligen Produktionseinheit zugeordnet ist.

Eine Bestimmung und Berücksichtigung des jeweiligen Umwelteinflusses kann die Bestimmung des jeweiligen Qualitätsindikators erheblich verbessern. So kann der lernfähige Algorithmus verbessert werden.

Bei einer weiteren vorteilhaften Ausgestaltung der Erfindung umfassen die Produktionsdaten Position und Ausprägung eines Befestigungsmittels, insbesondere eine Position und eine Menge einer aufgetragenen Lötpaste, oder Position und/oder Menge eines Isolationsmaterials.

Die Haltbarkeit eines Produktes wird vorteilhaft durch die Befestigung von Bauteilen untereinander definiert. Die Lebensdauer einer elektrischen Maschine oder eines Produkts mit einem elektrischen Leiter ist in der Regel von der Ausprägung einer desolaten Schicht des elektrischen Leiters abhängig.

Insbesondere bei der Produktion von bestückten Leiterplatten ist eine Kontaktierung der Bauteile mit der Leiterplatte von entscheidender Bedeutung für die Qualität des Produktes. Daher ist die Betrachtung des Auftragens der Lötpaste erheblich für die spätere Qualität und Langlebigkeit der mit Bauteilen bestückten Leiterplatte.

Insbesondere bei der Produktion von Leiterplatten kann die Kontaktierung der Bauteile mit der Leiterplatte anhand der Position und oder Dicke der aufgetragenen Lötpaste gut vorherbestimmt werden.

Darüber hinaus bestimmt die Isolation eines elektrischen Leiters, insbesondere eines Leiters in einer Wicklung, die Lebensdauer der elektrischen Maschine.

Bei einer weiteren vorteilhaften Ausgestaltung der Erfindung basiert der lernfähige Algorithmus auf einem Decision-Tree, einem neuronalen Netz und/oder einem Support-Vector-Algorithmus.

Da ein Zusammenhang zwischen Produktionsdaten und dem jeweiligen Qualitätsindikator oft nicht vollständig generisch ermittelbar ist, ist ein lernfähiger Algorithmus zur Zuordnung des Qualitätsindikators vorteilhaft.

Ein lernfähiger Algorithmus auf Basis eines Decision Trees umfasst eine verzweigte Struktur, welche an einer Eingangsseite, die dem jeweiligen Produktionsschritt zugeordnete Produktionsdaten aufnimmt. Vorteilhaft weist der Decision Tree Eingänge für die dem Produkt zugeordneten Produktionsdaten auf. Die Produktionsdaten werden anhand von zunächst geschätzten Parametern verknüpft. Vorteilhaft dienen zur Berechnung des jeweiligen Qualitätsindikators eine Mehrzahl von solchen Decision Trees mit jeweils unterschiedlichem Aufbau. Der Qualitätsindikator ist das Ergebnis der verknüpften Produktionsdaten. Die Parameter werden durch den Vergleich der Produktionsdaten mit dem entsprechenden Qualitätsindex bestimmt. Der jeweilige Qualitätsindex zu den jeweiligen Produktionsdaten wird beim Anlernen des Decision Trees bereitgestellt. Die Bestimmung der jeweiligen Parameter erfolgt vorzugsweise mit Hilfe eines zyklisch ablaufenden Anlernens, wobei vorteilhaft bei jedem Zyklus unterschiedliche Produktionsdaten mit dem Qualitätsindex des Produkts verglichen werden. Nach Durchlauf einer Vielzahl von Zyklen kann der selbstlernende Algorithmus anhand der Produktionsdaten einen Qualitätsindikator berechnen, der einem Qualitätsindex des jeweiligen Produktes entspricht.

Weiter kann der selbstlernende Algorithmus ein neuronales Netz umfassen. Das neuronale Netz kann ebenfalls zyklisch durch einen Vergleich von Produktionsdaten des jeweiligen Produktes mit dem Qualitätsindex des Produktes angelernt werden. Vorzugsweise umfasst ein neuronales Netz eine Mehrzahl von Schichten, wobei die jeweilige Schicht zumindest ein Neuron umfasst. Beim Anlernen des neuronalen Netzes werden die Verknüpfungen der Neuronen zueinander parametriert. Das neuronale Netz weist eine Eingangsschicht zur Aufnahme der Produktionsdaten und eine Ausgangsschicht zur Ausgabe des Qualitätsindikators auf.

Eine Support-Vector-Maschine kann ebenfalls zur Berechnung des jeweiligen Qualitätsindikators vorgesehen sein. Die jeweiligen Produktionsdaten können, vorzugsweise als Vektoren in einem affinen Raum, als ein Ensemble von Punkten dargestellt werden. Hierbei entspricht ein Vektor jeweils einem Produkt. Die einzelnen Produktionsdaten x1 ,..., xn bilden einen n-dimensionalen Raum, der den jeweiligen Vektor umfasst. Der Qualitätsindikator wird beim Anlernen der Support-Vektor-Maschine den jeweiligen Produktionsdaten zugeordnet. Der jeweilige Qualitätsindex liegt in dualer Darstellung vor und ist entweder "0" oder "1". Durch das Anlernen wird eine Hyperebene bestimmt, welche die Produktionsdaten in zwei Teile einteilt: die Produktionsdaten mit einem Qualitätsindikator "0" auf der einen Seite und die Produktionsdaten mit dem Qualitätsindikator "1" auf der anderen Seite der Hyperebene.

Durch die Definition der Hyperebene können neue Produktionsdaten schnell und einfach einem der beiden Qualitätsindikatoren zugewiesen werden.

Vorteilhaft kann eine Kombination von mehreren der vorgenannten lernfähigen Algorithmen zur Anwendung kommen.

Durch den Einsatz von zumindest einem der vorstehend genannten Algorithmen kann ein Qualitätsindikator besonders einfach bestimmt werden.

Bei einer weiteren vorteilhaften Ausgestaltung der Erfindung umfasst die Qualitätskontrolle ein optisches oder Röntgen-optisches Verfahren und/oder eine elektrische Prüfung des Produktes.

Die Qualitätskontrolle erfolgt vorteilhaft in einer Qualitätskontrolleinheit. Die Qualitätskontrolleinheit dient zur Feststellung, ob das Produkt den Qualitätserfordernissen entspricht. Die Qualitätskontrolleinheit dient zur Bereitstellung des Qualitätsindex für das jeweilige Produkt.

Der jeweilige Qualitätsindex wird vorzugsweise dem jeweiligen Produkt zugeordnet. Der Qualitätsindex wird vorteilhaft der Recheneinheit und/oder einer weiteren Recheneinheit bereitgestellt. Die weitere Recheneinheit kann zum Anlernen des lernfähigen Algorithmus dienen.

Vorteilhaft wird bei der Qualitätskontrolle mit Hilfe eines optischen oder eines Röntgen-optischen Verfahrens ein Bild von dem jeweiligen Produkt aufgenommen. Vorteilhaft wird aus dem Bild der Qualitätsindex des jeweiligen Produkts bestimmt. Das Bild kann dergestalt ausgewertet werden, ob eine Lötverbindung die zu verlötenden Bauteile ausreichend verbindet.

Ein optisches oder Röntgen-optisches Verfahren erfolgt vorzugsweise bei der Prüfung von Leiterplatten, insbesondere bei Printed Circuit Bards.

Alternativ oder zusätzlich kann eine elektrische Prüfung zur Feststellung der Isolation des elektrischen Leiters erfolgen. Eine elektrische Prüfung erfolgt vorteilhaft so, dass einzelne Punkte eines elektrischen Leiters mit einer elektrischen Spannung beaufschlagt werden und an anderer Stelle bestimmt wird, ob die richtige elektrische Spannung anliegt.

Eine elektrische Prüfung ist bei der Prüfung von einer ausreichenden Isolation eines elektrischen Leiters vorteilhaft. Insbesondere bei einem Einsatz eines elektrischen Leiters in einer Wicklung einer elektrischen Maschine können mit einer solchen Qualitätskontrolle Fehlfunktionen der elektrischen Maschine vermieden werden.

Mit Hilfe der Erfindung können solche Qualitätsprüfungen auf ein Minimum reduziert werden. So kann eine zum Teil aufwendige Qualitätsprüfung entfallen, ohne dass Nachteile bezüglich der Qualität des jeweiligen Produktes in Kauf genommen werden müssen.

Bei einer weiteren vorteilhaften Ausgestaltung der Erfindung umfasst das Produkt eine elektrische Schaltung auf einer Leiterplatte, insbesondere ein Printed Circuit Board.

Eine vorteilhafte Anwendung des vorstehend ausgeführten Verfahrens ist die Herstellung von Leiterplatten.

Bei der Herstellung von Leiterplatten wird eine Lötpaste auf elektrische Leiter, die auf der Leiterplatte positioniert sind, aufgebracht. Nach Positionierung der elektrischen und/oder elektronischen Bauteile auf die Leiterplatte erfolgt vorteilhaft die Verbindung der elektrischen und oder elektronischen Bauteile mit dem elektrischen Leiter durch ein Schmelzen der Lötpaste.

Bei einem herkömmlichen Herstellungsverfahren von Leiterplatten erfolgt eine Qualitätskontrolle nach dem Schmelzen der Lötpaste. Mit Hilfe der Qualitätskontrolle wird festgestellt ob die Lötverbindungen den Qualitätserfordernissen entsprechen.

Durch den Einsatz der Erfindung kann die Qualitätskontrolle stark eingeschränkt werden oder gar entfallen. Somit können Qualitätskontrolleinheiten eingespart werden.

Bei einer weiteren vorteilhaften Ausgestaltung der Erfindung sind mit Hilfe eines Konvertierungsmoduls Produktionsdaten von einer Mehrzahl von unterschiedlichen Sensoren auf einen Datentyp, insbesondere einen gemeinsamen Datentyp, wandelbar.

Oft stellen unterschiedliche Typen von Sensoren unterschiedliche Datentypen bereit. Um eine schnelle und sichere Bestimmung des Qualitätsindikators sicherzustellen, werden die unterschiedlichen Datentypen auf einen gemeinsamen Datentyp gewandelt.

Durch die Wandelung können für das jeweilige Produkt relevante Produktionsdaten extrahiert werden. Beispielhaft werden Werte aus Bilddateien extrahiert.

Datentypen können Bilddateien, XML-Dateien, Textdateien, ASCII-Dateien sein. Vorteilhaft erfolgt eine Zerlegung von XML-Dateien in die für die Bereitstellung des Qualitätsindikators relevanten Anteile.

Die Wandlung der unterschiedlichen Datentypen erfolgt mit einem sogenannten Parsing-Verfahren. Das Parsing-Verfahren wandelt den jeweiligen Datentyp in einen gemeinsamen Datentyp um und stellt damit vorteilhaft gleichartige Produktionsdaten bereit.

Bei einer weiteren vorteilhaften Ausgestaltung der Erfindung wird anhand des berechneten Qualitätsindikators ein Produktionsschritt angepasst.

Vorteilhaft erfolgt eine Veränderung des jeweiligen Produktionsschrittes falls ein vorhergehender Produktionsschritt gegebenenfalls nicht die Qualitätsanforderungen des Produkts erfüllt.

Falls eine Lötverbindung die Qualitätserfordernisse für das jeweilige Produkt öfters nicht erfüllt, kann beim Auftrag der Lötpaste die jeweilige Stelle mit einem verstärkten Auftrag von Lötpaste korrigiert und somit eine Verbesserung der Qualität bewirkt werden.

Falls bei der Qualitätskontrolle und/oder bei der Berechnung des Qualitätsindikators festgestellt wird, dass eine Isolationsschicht in einem bestimmten Bereich zu schwach ausgeprägt ist, so kann der Auftrag der Isolation an ebendieser Stelle verstärkt werden.

Allgemein kann durch den lernfähigen Algorithmus eine Rückwirkung der Erkenntnisse auf den jeweiligen Produktionsschritt erfolgen.

Durch die Erfindung wird die Möglichkeit geschaffen, den jeweiligen Produktionsschritt selbstlernend so anzupassen, dass die Qualität des jeweiligen Produktes erhöht wird.

Das Computerprogrammprodukt ist zur Ausführung auf einer Recheneinheit ausgebildet, wobei das Computerprogrammprodukt zur Ausführung eines hier beschrieben Verfahrens vorgesehen ist.

Das Computerprogrammprodukt ist vorzugsweise auf einem computerlesbaren Medium speicherbar. Das Computerprogrammprodukt wird zur Ausführung des hier beschriebenen Verfahrens vorzugsweise in den Arbeitsspeicher einer Recheneinheit geladen und mit einem Prozessor der Recheneinheit ausgeführt.

Vorteilhaft umfasst das Computerprogrammprodukt den lernfähigen Algorithmus. Der lernfähige Algorithmus kann mit Hilfe einer weiteren Recheneinheit angelernt werden.

Das Computerprogrammprodukt kann vorteilhaft zumindest teilweise auf der Steuereinheit der jeweiligen Produktionseinheit oder einer Vorrichtung zur Herstellung des Produktes ablaufen.

Die Vorrichtung dient zur Herstellung eines Produktes. Die Vorrichtung umfasst:
- eine Produktionseinheit oder mehrere Produktionseinheiten zur Herstellung des Produkts;
- eine Recheneinheit zur Berechnung und/oder Bereitstellung eines Qualitätsindikators des jeweilig hergestellten Produkts;
- Datenerfassungsmittel zur Bereitstellung von Produktionsdaten für die Recheneinheit,
wobei die Berechnung und/oder Bereitstellung des Qualitätsindikators mit Hilfe eines hier beschriebenen Verfahrens vorgesehen ist.

Die Recheneinheit kann der Vorrichtung auch lediglich zugeordnet sein. Die Verbindung der Vorrichtung mit der Recheneinheit erfolgt über eine technische Datenverbindung, wie ein Intranet oder das Internet.

Vorteilhaft ist das vorstehend beschriebene Computerprogrammprogramm auf der Recheneinheit installiert und ablauffähig.

Die Recheneinheit dient zur Bereitstellung des jeweiligen Qualitätsindikators auf Grundlage der Produktionsdaten.

Die Produktionsdaten werden vorteilhaft anhand von Steuersignalen für die jeweilige Produktionseinheit ermittelt. Alternativ oder zusätzlich werden Produktionsdaten mit Hilfe von Sensoren bereitgestellt. Die Sensoren sind vorteilhaft der jeweiligen Produktionseinheit zugeordnet.

Ein Sensor kann als Positionssensor, als Kamera, als Geber zur Erfassung einer Bewegung, als Feuchte-Sensor oder als Temperatursensor ausgebildet sein.

Vorzugsweise erfolgt zumindest ein Produktionsschritt in einer Produktionseinheit. Vorteilhaft erfolgt eine Weitergabe des Produkts von einer Produktionseinheit an eine weitere Produktionseinheit nach Ablauf des zumindest einen Produktionsschrittes, der der Produktionseinheit zugeordnet ist.

Eine Qualitätskontrolle des Produkts erfolgt vorzugsweise nach Durchlauf der Produktionseinheiten und/oder nach dem jeweiligen Produktionsschritt.

Mit Hilfe der Vorrichtung kann ein Produkt besonders schnell und preisgünstig hergestellt werden, da die Qualitätskontrolle, zumindest zum Teil, entfallen kann.

Bei einer weiteren vorteilhaften Ausgestaltung der Erfindung umfasst die Vorrichtung weiter eine Qualitätskontrolleinheit, wobei die Qualitätskontrolleinheit zur Bestimmung eines Qualitätsindex des jeweiligen Produktes ausgebildet ist.

Die Qualitätskontrolleinheit stellt vorteilhaft den jeweiligen Qualitätsindex des Produktes bereit. Die Bereitstellung erfolgt vorzugsweise an die Recheneinheit. Vorteilhaft wird der jeweilige Qualitätsindex dem jeweiligen Produkt zugeordnet. Vorzugsweise erfolgt die Zuordnung mit Hilfe einer Datenbank.

Durch die Bestimmung des Qualitätsindex kann der lernfähige Algorithmus verbessert werden und/oder die Berechnung des Qualitätsindikators überprüft werden.

Bei einer weiteren vorteilhaften Ausgestaltung der Erfindung sind die Recheneinheit und die Qualitätskontrolleinheit derart zusammenwirkend ausgebildet oder betreibbar, so dass der von der Recheneinheit bereitgestellte Qualitätsindikator und der von der Qualitätskontrolleinheit bereitgestellte Qualitätsindex den selben Wert annehmen.

Das Zusammenwirken erfolgt vorteilhaft durch das Anlernen des lernfähigen Algorithmus. Durch die Bereitstellung des jeweiligen Qualitätsindex des jeweiligen Produkts an die Recheneinheit oder an eine weitere Recheneinheit, kann der lernfähige Algorithmus verbessert werden.

Ziel der Verbesserung des lernfähigen Algorithmus ist es das mit einer an "1" grenzenden Wahrscheinlichkeit der Qualitätsindikator dem Qualitätsindex entspricht.

Das Zusammenwirken erfolgt vorzugsweise durch das Anlernen des lernfähigen Algorithmus auf der weiteren Recheneinheit, insbesondere der Cloud.

Bei einer weiteren vorteilhaften Ausgestaltung der Erfindung erfolgt das Zusammenwirken der Qualitätskontrolleinheit und der Recheneinheit derart, dass bei einer Projektierung der Vorrichtung zur Herstellung des Produktes die Qualitätskontrolleinheit so ausgebildet sein kann, dass nur ein vorgebbarer Teil der Produkte einer Qualitätskontrolle bedürfen, ohne dass das Qualitätserfordernis des jeweiligen Produkts unterschritten wird.

Ein Zusammenwirken der Qualitätskontrolleinheit und der Recheneinheit erfolgt vorzugsweise durch das kontinuierliche Anlernen des lernfähigen Algorithmus. Ein angelernter lernfähiger Algorithmus, der auf einer Recheneinheit installiert ist, kann mit Hilfe von Produktionsdaten vorteilhaft die Qualitätskontrolleinheit zumindest teilweise ersetzen.

Vorteilhaft erfolgt eine Projektierung der Vorrichtung derart, so dass eine Bestimmung des Qualitätsindikators mit Hilfe des lernfähigen Algorithmus die Anzahl produzierter Produkte erhöht, da eine Durchsatzbegrenzung der Qualitätskontrolleinheit vorteilhaft entfällt.

Da eine Qualitätskontrolleinheit in der Regel erheblich teurer ist als eine Recheneinheit, kann die Vorrichtung zur Herstellung des Produktes kostensparend ausgebildet werden.

Bei einer weiteren vorteilhaften Ausgestaltung der Erfindung ist das jeweilige Datenerfassungsmittel als Sensor ausgebildet.

Bei einer weiteren vorteilhaften Ausgestaltung der Erfindung weist die Vorrichtung einen Bildschirm auf, wobei der Bildschirm zur Anzeige des jeweiligen Qualitätsindex und/oder des jeweiligen Qualitätsindikators ausgebildet ist, und wobei der Benutzer auf Grundlage des angezeigten Qualitätsindex entscheiden kann, was mit dem jeweiligen Produkt geschieht.

Bei einer weiteren vorteilhaften Ausgestaltung der Erfindung ist die Recheneinheit mit einer weiteren Recheneinheit, insbesondere einem dezentralen Server oder einer Cloud, gekoppelt, wobei die weitere Recheneinheit zum Anlernen des lernfähigen Algorithmus vorgesehen ist.

Die weitere Recheneinheit dient vorteilhaft zur Aufnahme von Produktionsdaten und den entsprechenden Qualitätsindices der entsprechenden Produkte. Vorteilhaft umfasst die weitere Recheneinheit die Datenbank.

Durch die weitere Recheneinheit kann die Recheneinheit, welche den Produktionseinheiten zugeordnet ist, leistungsschwächer ausgebildet werden.

Bei einer weiteren vorteilhaften Ausgestaltung der Erfindung dient die Vorrichtung zur Produktion von Leiterplatten mit Bauteilen. Die Produktionsdaten dienen zur Beschreibung eines Auftragens einer Lötpaste auf die Leiterplatte, wobei der Qualitätsindikator und/oder der Qualitätsindex zur Beschreibung einer ausreichenden Kontaktierung der Bauteile mit der Leiterplatte nach einem Lötprozess vorgesehen sind.

Die Qualitätskontrolleinheit dient vorteilhaft zur Überprüfung der jeweiligen Verbindung des jeweiligen Bauteils mit dem elektrischen Leiter der Leiterplatte.

Der Qualitätsindikator gibt bei diesem Ausführungsbeispiel beispielhaft an, ob alle Kontakte zwischen der Leiterplatte und dem jeweiligen Bauteil entsprechend der Qualitätserfordernisse ausgebildet sind.

So kann beispielhaft bei einem Auftrag der Lötpaste mit einem zu großen Abstand zum Kontaktelement des jeweiligen Bauteils davon ausgegangen werden, dass die entfernt aufgebrachte Lötpaste nicht ausreichend ist, eine ausreichende Kontaktierung zu ermöglichen.

Bei einer weiteren vorteilhaften Ausgestaltung der Erfindung ist der Qualitätsindex des jeweiligen Produktes mit Hilfe der Qualitätskontrolleinheit, insbesondere mittels eines optischen und/oder Röntgen-optischen Verfahrens, bestätigbar.

Das optische oder das Röntgen-optische Verfahren dient vorzugsweise zur Prüfung, wie die Lötverbindung ausgeprägt ist. Entsprechend einer Sichtprüfung einer Lötstelle kann die Verteilung des (aus der Lötpaste freigesetzten) Metalls mit Hilfe der Qualitätskontrolleinheit bestimmt werden.

Vorteilhaft erfolgt mit Hilfe der Qualitätskontrolleinheit lediglich eine Bestätigung des Qualitätsindikators. Die Übereinstimmung des jeweiligen Qualitätsindikators mit dem entsprechenden Qualitätsindex wird vorzugsweise geprüft. Die Prüfung erfolgt vorteilhaft mit einer statistischen Auswertung.

Durch die Bestätigung des jeweiligen Qualitätsindikators kann vorteilhaft ermittelt werden, wie gut der lernfähige Algorithmus angelernt ist.

Bei einer weiteren vorteilhaften Ausgestaltung der Erfindung ist eine erste Produktionseinheit zum Auftragen einer Lötpaste auf eine Leiterplatte vorgesehen, wobei zumindest eine zweite Produktionseinheit zur Bestückung der Leiterplatte mit Bauteilen vorgesehen ist, wobei eine dritte Produktionseinheit als Ofen ausgebildet ist, wobei der Ofen zur Ausbildung einer elektrischen Verbindung der Leiterplatte mit dem jeweiligen Bauteil mit Hilfe der Lötpaste dient.

Die Lötpaste umfasst vorteilhaft Metallpartikel in einem viskosen Medium. In dem ersten Produktionsschritt erfolgt ein Auftragen der Lötpaste auf der Leiterplatte. Die Lötpaste wird vorzugsweise in den Bereichen aufgetragen, in denen eine Lötverbindung zwischen den Bauteilen und der Leiterplatte erfolgt.

In einem zweiten Produktionsschritt werden die Bauteile auf der Leiterplatte positioniert und/oder befestigt. Der zweite Produktionsschritt erfolgt in einer zweiten Produktionseinheit, wobei die zweite Produktionseinheit beispielhaft als Bestückungsautomat ausgebildet ist.

In einem dritten Produktionsschritt wird die Leiterplatte in einem Ofen erwärmt, sodass die Lötpaste eine stabile Lötverbindung zwischen der Leiterplatte und dem jeweiligen Bauteil ausformt.

Gemäß dem Stand der Technik erfolgt nach Durchlauf des Ofens eine Qualitätskontrolle mit Hilfe einer Qualitätskontrolleinheit. Um die Qualitätskontrolleinheit einzusparen, erfolgt vorteilhaft die Bestimmung des Qualitätsindikators gemäß einem hier beschriebenen Verfahren.

Durch die Erfindung kann die Herstellung von Leiterplatten ohne eine Qualitätskontrolleinheit erfolgen.

Bei einer weiteren vorteilhaften Ausgestaltung der Erfindung ist die Produktionseinheit zur Isolation eines elektrischen Leiters, insbesondere einer Wicklung für eine elektrische Maschine, ausgebildet, wobei der Qualitätsindex und/oder der Qualitätsindikator jeweils ein Maß für die Isolation des Leiters sind.

Vorteilhaft werden elektrische Leiter vor dem Wickeln einer Spule oder einer Wicklung an seiner Oberfläche isoliert. Die Isolation des elektrischen Leiters dient vorteilhaft zum Schutz weiterer Bauteile, wie ein Blechpaket, vor der Berührung mit dem elektrischen Leiter.

Insbesondere vor dem Einsatz der Wicklung in den Starter oder in den Rotor einer elektrischen Maschine erfolgt eine Prüfung der Isolation. Die Prüfung der Isolation erfolgt vorteilhaft durch Aufschlagen einer elektrischen Spannung und dem punktweisen messen von elektrischen Potenzialen an der Wicklung oder an weiteren Bauteilen.

Eine solche elektrische Prüfung ist kompliziert und kann vorteilhaft durch die Bestimmung des Qualitätsindikators zumindest teilweise entfallen.

Bei einer weiteren vorteilhaften Ausgestaltung der Erfindung umfasst die Vorrichtung zumindest zwei Herstellungslinien, wobei die jeweilige Herstellungslinie jeweils eine Produktionseinheit oder jeweils mehrere Produktionseinheiten umfasst, wobei die zumindest zwei Herstellungslinien jeweils Produktionseinheiten zur jeweiligen Herstellung des Produktes umfassen, und wobei eine Qualitätskontrolleinheit den zumindest zwei Herstellungslinien zugeordnet ist, wobei die zumindest zwei Herstellungslinien die Qualitätskontrolleinheit nutzen, wobei die Qualitätskontrolleinheit lediglich zur Qualitätskontrolle einer Anzahl von Produkten einer einzelnen Herstellungslinie ausgebildet ist.

Vorteilhaft dienen die Herstellungslinien zur Herstellung von zumindest ähnlichen Produkten. Vorzugsweise sind die Herstellungslinien einer Qualitätskontrolleinheit zugeordnet.

Vorteilhaft stellen die zumindest zwei Herstellungslinien eine Anzahl von Produkten bereit, welche durch eine einzelne Qualitätskontrolleinheit nicht auf die jeweiligen Qualitätserfordernisse kontrollierbar wären.

Durch die Berechnung des Qualitätsindikators des jeweiligen Produktes kann die Qualitätskontrolleinheit entlastet werden. Demnach ist die Zuordnung einer Qualitätskontrolleinrichtung zu einer Mehrzahl von Herstellungslinien durch Berechnung des jeweiligen Qualitätsindikators möglich.

Vorteilhaft ist eine Recheneinheit gemeinsam für die Herstellungslinien zugeordnet. Der lernfähige Algorithmus ist vorteilhaft auf der Recheneinheit installiert. Der lernfähige Algorithmus bestimmt den jeweiligen Qualitätsindikator für die jeweiligen Produkte der zumindest zwei Herstellungslinien.

Vorteilhaft kann der jeweiligen Herstellungslinie eine eigene Recheneinheit zugeordnet werden. Vorzugweise erfolgt das Anlernen des lernfähigen Algorithmus auf einer weiteren Recheneinheit, insbesondere mit Hilfe einer dezentralen Recheneinheit.

Vorteilhaft kann, je nach Anlern-Zustand des lernfähigen Algorithmus, der jeweilige Qualitätsindikator des jeweiligen Produktes bestimmt werden. Insofern der Anlern-Zustand ausreichend ist, kann auf die Bestimmung des jeweiligen Qualitätsindex verzichtet werden. Mithin können eine Mehrzahl von Herstellungslinien einer Qualitätskontrolleinheit zugeordnet werden.

In einer weiteren vorteilhaften Ausgestaltung der Erfindung umfasst die Vorrichtung:
- eine erste Anzahl an Produktionseinheiten mit einer maximalen Produktionskapazität einer zweiten Anzahl von Produkten pro Zeiteinheit,
- eine dritte Anzahl an Qualitätskontrolleinheiten zur Bestimmung der jeweiligen Qualitätsindices der jeweiligen Produkte,
- wobei eine Kontrollkapazität der dritten Anzahl von Qualitätskontrolleinheiten pro Zeiteinheit eine vierte Anzahl bildet,
- wobei das Produkt der ersten Anzahl und der zweiten Anzahl kleiner als die vierte Anzahl ist.

Eine Zeiteinheit kann eine Minute oder eine Stunde sein. Vorzugsweise dienen die Produktionseinheiten zur Herstellung eines Produkts, wobei die Produktionseinheiten in paralleler Weise zur Herstellung von Produkten ausgebildet sein können.

Mit Hilfe der ersten Anzahl von Produktionseinheiten können beispielhaft eine zweite Anzahl von Produkten pro Zeiteinheit hergestellt werden.

Mit der dritten Anzahl von Qualitätskontrolleinheiten können lediglich eine vierte Anzahl von Qualitätskontrolleinheiten hergestellt werden.

Mit Hilfe der Erfindung ist es möglich, dass trotz der Sicherstellung der Qualitätserfordernisse des Produktes weniger Produkte geprüft als hergestellt werden. Mit Hilfe der Erfindung ist also entweder keine Qualitätskontrolle mit Hilfe der Qualitätskontrolleinheit notwendig oder lediglich eine reduzierte Qualitätskontrolle einer reduzierten Anzahl von Produkten.

Durch den Einsatz der Erfindung ist es überhaupt möglich, die Kapazität von Qualitätskontrolleinrichtungen zu reduzieren.

Eine weitere mögliche Lösung der eingangs genannten Aufgabe der Erfindung kann ein computerlesbares Medium sein, wobei das computerlesbare Medium das vorstehend beschriebene Computerprogrammprodukt umfasst.

Das computerlesbare Medium kann als CD-Rom, als DVD-Rom oder als USB-Stick ausgebildet sein.

Alternativ oder zusätzlich kann das Computerprogrammprodukt zum Download über das Internet bereitgestellt sein und von dort auf einer lokalen Festplatte der Recheneinheit oder der weiteren Recheneinheit gespeichert und/oder ausgeführt werden.

Zur Lösung der vorstehend genannten Aufgabe kann auch ein Datenverarbeitungsprodukt dienen, wobei das Datenverarbeitungsprodukt zum Anlernen des vorstehend beschriebenen lernfähigen Algorithmus ausgebildet ist, wobei das Anlernen des lernfähigen Algorithmus einen Vergleich von Produktionsdaten und dem jeweils entsprechenden Qualitätsindex des Produktes umfasst.

Das Datenverarbeitungsprodukt ist vorzugsweise auf der weiteren Recheneinheit installiert und dort ablauffähig.

Im Folgenden wird die Erfindung anhand von Figuren näher beschrieben und erläutert. Die jeweils in den Figuren gezeigten Ausführungen sind lediglich beispielhaft und schränken die Erfindung keinesfalls ein. Einzelne, in den Figuren gezeigte Merkmale können zu neuen Ausführungsformen der Erfindung kombiniert werden. Es zeigen:
- FIG 1: eine beispielhafte Vorrichtung,
- FIG 2: ein beispielhaftes Verfahren,
- FIG 3: ein beispielhafter lernfähiger Algorithmus,
- FIG 4: eine weitere beispielhafte Vorrichtung sowie
- FIG 5: eine weitere beispielhafte Vorrichtung.

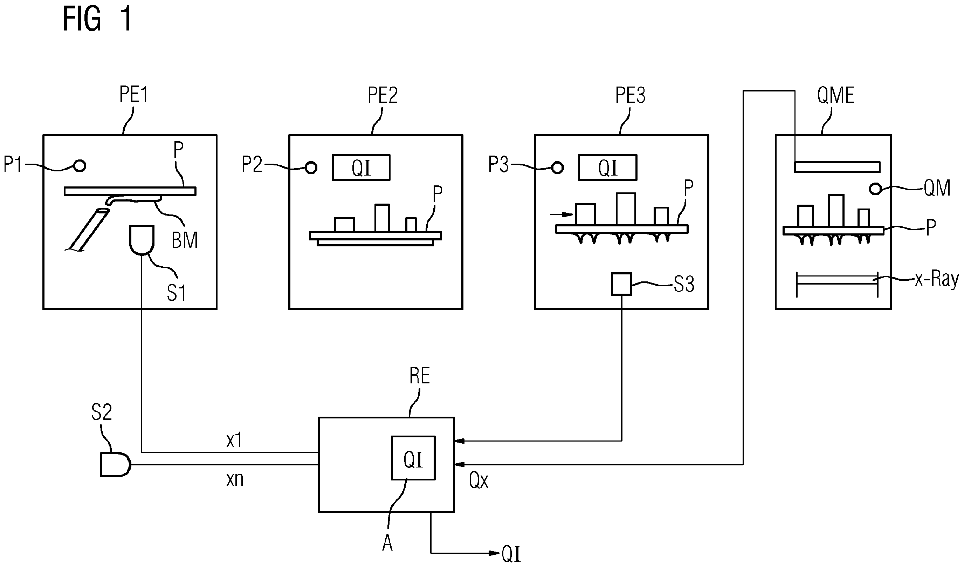

FIG 1 zeigt eine beispielhafte Vorrichtung. Die Vorrichtung umfasst drei Produktionseinheiten PE1, PE2, PE3. Die Vorrichtung umfasst weiter eine Qualitätskontrolleinheit QME. In der ersten Produktionseinheit PE1 erfolgt ein erster Produktionsschritt P1. Beim ersten Produktionsschritt P1 wird ein Befestigungsmittel BM auf ein Produkt P aufgebracht. Ein mögliches Befestigungsmittel BM ist ein Klebstoff oder eine Lötpaste. Ein erster Sensor S1 erfasst den Ort und die Menge des aufgetragenen Befestigungsmittels BM auf das Produkt P. Der erste Sensor S1 stellt die Produktionsdaten X1 des ersten Produktionsschrittes P1 an die Recheneinheit RE bereit. Das Produkt P wird danach einer zweiten Produktionseinheit PE2 zugeführt.

Ein zweiter Sensor S2 dient hier zur Bestimmung eines Umwelteinflusses wie einer Temperatur oder der Luftfeuchtigkeit. Vorteilhaft erfolgt eine Erfassung des Umwelteinflusses insofern, als dass der Umwelteinfluss einen der Produktionsschritte P1, P2, P3 beeinflusst.

In der zweiten Produktionseinheit PE2 erfolgt ein zweiter Produktionsschritt P2. Beim zweiten Produktionsschritt P2 wird das Produkt P weiterbearbeitet. Dem Produkt P wird darüber hinaus ein Qualitätsindex QI zugewiesen. Der Qualitätsindex QI wird von der Recheneinheit RE bereitgestellt und dem Produkt P während dem Durchlauf der Produktionsschritte zugeordnet. Das Produkt P wird weiter in eine dritte Produktionseinheit PE3 überführt. In der dritten Produktionseinheit PE3 erfolgt ein dritter Produktionsschritt P3. Der dritten Produktionseinheit PE3 ist ein dritter Sensor S3 zugeordnet.

Nach Durchlauf des dritten Produktionsschrittes P3 erfolgt eine Qualitätskontrolle QM in einer Qualitätskontrolleinheit QME. Die Qualitätskontrolleinheit QME umfasst einen weiteren Sensor, wobei der weitere Sensor zur Überprüfung des Qualitätsindex QI des jeweiligen Produkts P ausgebildet ist. Hier erfolgt die Qualitätskontrolle QM mit Hilfe einer Röntgenanalyse. In diesem Fall ist der weitere Sensor als Röntgen-Detektor ausgebildet.

Vorteilhaft kann mit Hilfe des dem Produkt P zugeordneten Qualitätsindex QI entschieden werden, ob für das Produkt P nach Durchlauf der dritten Produktionseinheit PE3 eine Qualitätskontrolle QM in der Qualitätskontrolleinheit QME notwendig ist oder nicht.

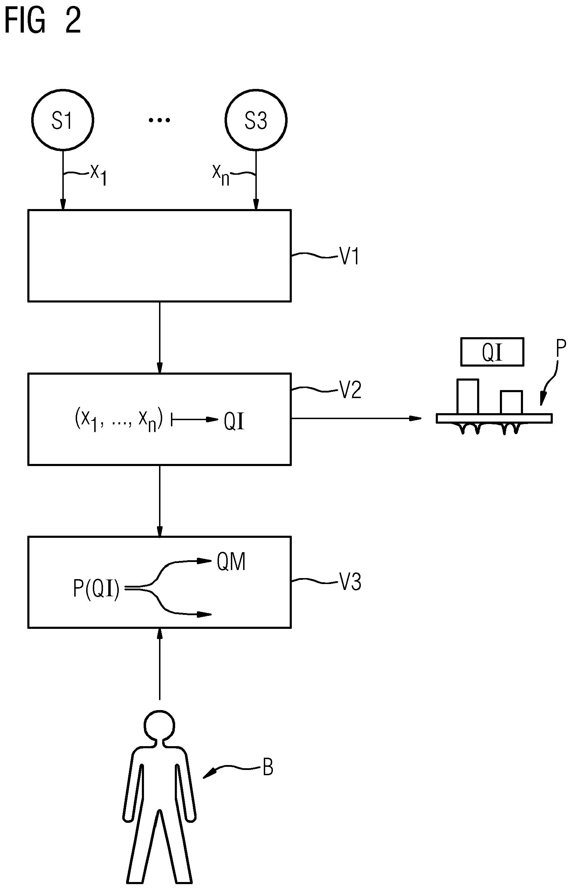

FIG 2 zeigt ein beispielhaftes Verfahren. In einem ersten Verfahrensschritt V1 werden Produktionsdaten x1 ,..., xn von Sensoren S1, S2, S3 einer Recheneinheit RE bereitgestellt. Optional werden im ersten Verfahrensschritt V1 die Produktionsdaten x1 ,..., xn auf einen einheitlichen Datentyp konvertiert. In einem zweiten Verfahrensschritt V2 wird mit Hilfe des lernfähigen Algorithmus A aus den Produktionsdaten x1 ,..., xn der Qualitätsindex QI berechnet. Der Qualitätsindex QI wird dem jeweiligen Produkt P zugeordnet, bei dessen Produktion die Produktionsdaten x1 ,..., xn ermittelt worden sind. Die Zuordnung des Qualitätsindex QI zu dem Produkt P kann durch Eintrag in eine Datenbank (nicht gezeigt) oder durch eine Markierung des Qualitätsindex QI an dem Produkt P selbst erfolgen. In einem dritten Verfahrensschritt V3 wird anhand des Qualitätsindex QI entschieden, ob eine Qualitätskontrolle QM für das jeweilige Produkt P erfolgt oder nicht. Bei der Entscheidung, ob eine Qualitätskontrolle QM erfolgt, kann auch ein Benutzer B anhand der ihm angezeigten Qualitätsindizes QI die Durchführung einer Qualitätskontrolle QM bestätigen.

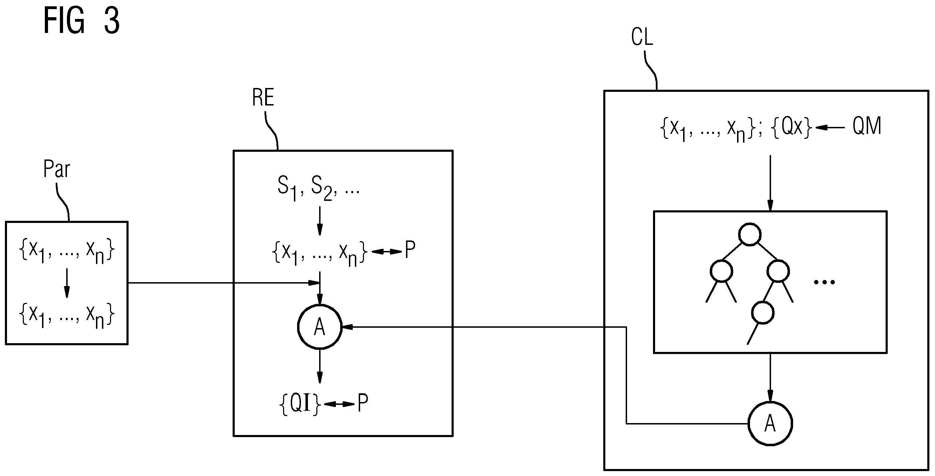

FIG 3 zeigt einen beispielhaften, lernfähigen Algorithmus A. Algorithmus A dient zur Berechnung des Qualitätsindex QI aus den Produktionsdaten x1 ,..., xn. Die Produktionsdaten x1 ,..., xn werden dabei bei der Produktion des jeweiligen Produkts von den Sensoren S1, S2, S3 ermittelt. Nach der Berechnung des jeweiligen Qualitätsindex QI wird dieser Qualitätsindex QI dem Produkt P zugeordnet.

Optional erfolgt mit Hilfe eines Konvertierungsmoduls Par eine Konvertierung der Produktionsdaten x1 ,..., xn in einen vereinheitlichten Datentyp. Die Produktionsdaten x1 ,..., xn in dem vereinheitlichten Datentyp werden dem lernfähigen Algorithmus A zugeführt.

Um den lernfähigen Algorithmus A zu verbessern, erfolgt vorteilhaft ein Anlernen des lernfähigen Algorithmus A. Das Anlernen des lernfähigen Algorithmus A erfolgt vorzugsweise in einer weiteren Recheneinheit CL, beispielsweise einer Cloud. Zur Verbesserung des lernfähigen Algorithmus A werden gemessene Produktionsdaten x1 ,..., xn mit Qualitätsindizes QI verglichen, welche bei einer Qualitätskontrolle QM ermittelt worden sind. Sowohl die Produktionsdaten x1 ,..., xn als auch die zugeordneten Qualitätsindizes QI werden einem neuronalen Netz, einem Algorithmus, der auf künstlicher Intelligenz basiert, oder einem Support-Vektor-Algorithmus bereitgestellt. Der lernfähige Algorithmus A verbessert sich durch den Vergleich der mit Hilfe von Sensoren ermittelten Produktionsdaten X1 ,..., xn und den ebenfalls experimentell ermittelten Qualitätsindizes QI. Vorzugsweise erfolgt ein regelmäßiger Austausch des lernfähigen Algorithmus A der Recheneinheit RE mit dem trainierten, lernfähigen Algorithmus A aus der weiteren Recheneinheit CL.

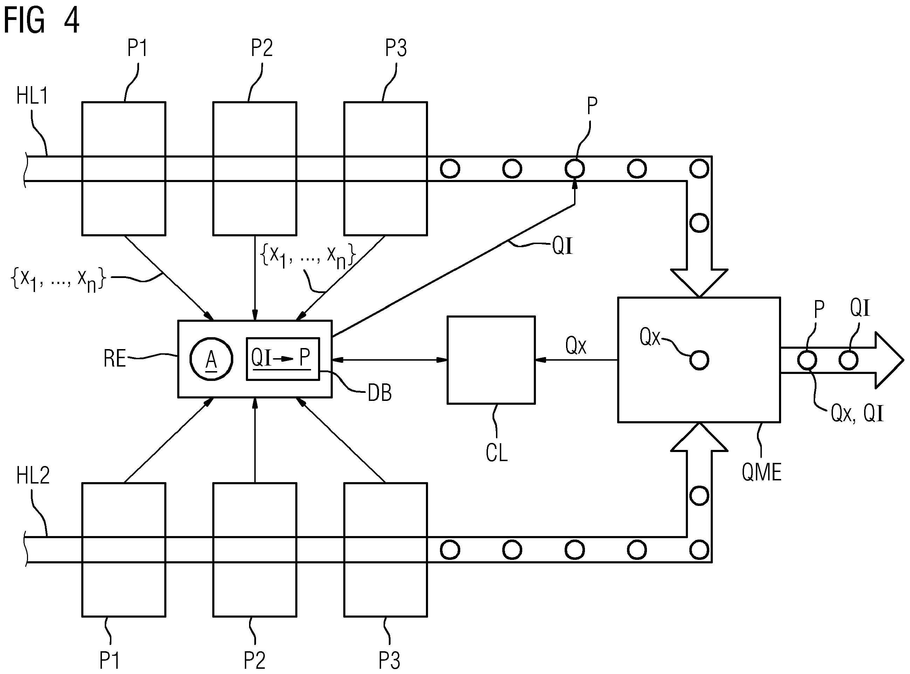

FIG 4 zeigt eine weitere beispielhafte Vorrichtung. Die Vorrichtung umfasst zwei Herstellungslinien HL1, HL2 und eine Qualitätskontrolleinheit QME.

Die erste Herstellungslinie HL1 und die zweite Herstellungslinie HL2 umfassen jeweils drei Produktionseinheiten PE1, PE2, PE3. Die Produktionseinheiten PE1, PE2, PE3 dienen jeweils zur Herstellung von Produkten P.

Die Produktionseinheiten PE1, PE2, PE3 stellen jeweils Produktionsdaten x1 ,..., xn an eine Recheneinheit RE bereit. Die Recheneinheit RE dient zur Bestimmung eines Qualitätsindikators QI für das jeweilige Produkt P. Der Qualitätsindikator QI wird dem jeweiligen Produkt P zugeordnet. Die Zuordnung erfolgt vorteilhaft mit Hilfe einer Datenbank DB.

Ein lernfähiger Algorithmus A ist, vorzugsweise in Form eines Computerprogrammproduktes, auf der Recheneinheit RE installiert. Mit Hilfe des lernfähigen Algorithmus A stellt die Recheneinheit für das jeweilige Produkt einen Qualitätsindikator QX bereit.

Der lernfähige Algorithmus A wird vorzugsweise mit Hilfe einer weiteren Recheneinheit CL angelernt. Die weitere Recheneinheit CL ist vorteilhaft mit der Recheneinheit RE zumindest zeitweise datentechnisch verbunden. Die Recheneinheit RE stellt die Produktionsdaten x1 ,..., xn an die weitere Recheneinheit CL bereit.

Die Produkte P von der ersten Herstellungslinie HL1 und der zweiten Herstellungslinie HL2 werden einer Qualitätskontrolleinheit QME bereitgestellt.

Die Qualitätskontrolleinheit QME dient zur Qualitätskontrolle QM von einzelnen Produkten P. Die Qualitätskontrolleinheit QME ordnet demnach einem Teil der Produkte P einen Qualitätsindex QX zu. Die Qualitätskontrolleinheit QME stellt den jeweiligen Qualitätsindex QX für das jeweilige Produkt der weiteren Recheneinheit CL bereit. Die weitere Recheneinheit CL dient vorteilhaft einem Vergleich der Qualitätsindikatoren QI mit dem jeweils bestimmten Qualitätsindex QX.

Durch den Vergleich des Qualitätsindex QX mit dem entsprechenden Qualitätsindikator QI kann die weitere Recheneinheit CL prüfen, wie gut die Bestimmung des Qualitätsindikators QI ist.

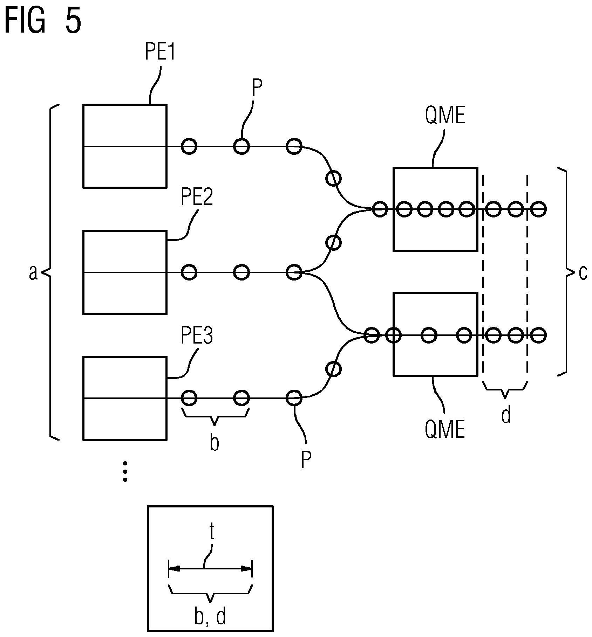

FIG 5 zeigt eine weitere beispielhafte Vorrichtung. Die Vorrichtung umfasst eine erste Anzahl a von Produktionseinheiten PE1, PE2, PE3. In dem gezeigten Beispiel ist die erste Anzahl a gleich zwei. Die erste Anzahl von Produktionseinheiten PE1, PE2, PE3 ist zur Herstellung einer zweiten Anzahl b von Produkten P pro Zeiteinheit t ausgebildet. Die zweite Anzahl ist hier als zwei gezeigt, d.h. eine Produktionseinheit PE1, PE2, PE3 kann maximal zwei Produkte pro Zeiteinheit t herstellen.

Die drei Produktionseinheiten PE1, PE2, PE3 stellen beispielhaft gemeinsam sechs Produkte pro Zeiteinheit t her.

Die sechs Produkte P pro Zeiteinheit t werden an eine dritte Anzahl c Qualitätskontrolleinheiten QME bereitgestellt. Die Qualitätskontrolleinheiten QME können beispielhaft lediglich eine Qualitätskontrolle QM einer vierten Anzahl d von Produkten P in der Zeiteinheit t durchführen. In diesem Beispiel ist die vierte Anzahl gleich 4. Demnach durchlaufen eine größere Anzahl von Produkten P, nämlich dem Produkt der ersten Anzahl a und der zweiten Anzahl b von Produkten P, eine Qualitätskontrolle QM in einer der Qualitätskontrolleinheiten QME. Das Produkt der ersten Anzahl a und der zweiten Anzahl b ist vorteilhaft höher als die Kapazität der Qualitätskontrolleinheiten QME in ihrer Gesamtheit. Die Kapazität ist durch die vierte Anzahl d angebbar. In dem hier gezeigten Beispiel ist die vierte Anzahl gleich 4 und somit geringer als das Produkt der ersten Anzahl a und der zweiten Anzahl b (a*b=6).

Durch die Erfindung kann mit Hilfe der Berechnung und Zuweisung des jeweiligen Qualitätsindikators zu dem jeweiligen Produkt P die Produktivität der Vorrichtung vorteilhaft erhöht sein.

Zusammenfassend betrifft die Erfindung ein Verfahren und eine Vorrichtung zur Herstellung eines Produktes P sowie ein Computerprogrammprodukt. Das Produkt P wird hierbei in zumindest einem Produktionsschritt P1, P2, P3 hergestellt. Optional erfolgt nach zumindest einem der Produktionsschritte P1, P2, P3 eine Qualitätskontrolle QM zur Ermittlung eines Qualitätsindex QX des jeweiligen Produktes P. Um die Qualitätskontrolle QM einzusparen, erfolgt eine Bestimmung eines Qualitätsindikators QI des jeweiligen Produktes P anhand von Produktionsdaten x1 ,..., xn. Die Produktionsdaten x1 ,..., xn werden vorteilhaft von Sensoren S1, S2, S3 bereitgestellt. Die Berechnung des Qualitätsindikators QI des jeweiligen Produktes P erfolgt vorzugsweise mit Hilfe eines lernfähigen Algorithmus A. Der lernfähige Algorithmus A kann mit Qualitätsindices QX aus einer Qualitätskontrolle QM und den entsprechenden Produktionsdaten x1 ,..., xn angelernt und/oder verbessert werden. Das Anlernen des lernfähigen Algorithmus A erfolgt vorzugsweise mit Hilfe einer weiteren Recheneinheit CL, insbesondere in einer Cloud.

## Patentansprüche

1. Verfahren, umfassend die folgenden Schritte:
- Produktion einer Leiterplatte (P) in einem Produktionsschritt (P1, P2, P3) oder in mehreren Produktionsschritten (P1, P2, P3);
- jeweils eine Bereitstellung von Produktionsdaten (x1 ,..., xn) während zumindest eines Produktionsschrittes (P1, P2, P3); wobei die Produktionsdaten die Position einer Lötpaste auf einer Leiterplatte, die Abweichung der aufgetragenen Lötpaste in Bezug zu einer Soll-Position bzw. einem Soll-Verlauf, die Dicke der aufgetragenen Schicht der Lötpaste, und/oder eine Temperatur oder eine Luftfeuchtigkeit der jeweiligen Umgebung der Leiterplatte sind,
- Berechnung eines Qualitätsindikators (QI) auf Grundlage der jeweiligen Produktionsdaten (x1, ..., xn), **dadurch gekennzeichnet, dass** das Verfahren den folgenden Schritt umfasst:
Zuweisung des Qualitätsindikators (QI) zu der jeweiligen Leiterplatte (P).

2. Verfahren nach Anspruch 1, wobei das Verfahren den folgenden Schritt umfasst:
Zuordnung des jeweiligen Qualitätsindikators (QI) der jeweiligen Leiterplatte (P) mit Hilfe einer Datenbank oder mit Hilfe einer Markierung auf der Leiterplatte zugeordnet wird.

3. Verfahren nach einem der vorangehenden Ansprüche, wobei das Verfahren die folgenden Schritte umfasst:
- durchführung einer Qualitätskontrolle nach zumindest einem Produktionsschritt (P1, P2, P3), und
- Zuordnung, bei der Qualitätskontrolle (QM) der jeweiligen Leiterplatte (P) , jeweils eines Qualitätsindex (QX) .

4. Verfahren nach Anspruch 3, wobei das Verfahren den folgenden Schritt umfasst:
- Bestimmung des Qualitätsindikators (QI) mit Hilfe eines lernfähigen Algorithmus (A) bestimmt wird, wobei der lernfähige Algorithmus (A) durch Vergleich von Produktionsdaten (x1 ,..., xn), den Qualitätsindices (QX) und optional dem jeweiligen Qualitätsindikator (QI) anlernbar ist.

5. Verfahren nach einem der vorangehenden Ansprüche, wobei das Verfahren den folgenden Schritt umfasst:
- Anlernen des lernfähigen Algorithmus (A) derart, dass der jeweilige Qualitätsindikator (QI) dem jeweiligen Qualitätsindex (QX) der jeweiligen Leiterplatte (P) entspricht.

6. Verfahren nach einem der vorangehenden Ansprüche, wobei das Verfahren die folgenden Schritte umfasst:
- Anzeigen, zu einem Benutzer (B) , des Qualitätsindikators (QI) und/oder des Qualitätsindex (QX) der jeweiligen Leiterplatte (P), und
- Möglichkeit für den Benutzer anhand des Qualitätsindikators (QI) auszuwählen, was mit der Leiterplatte (P) geschieht.

7. Verfahren nach einem der vorangehenden Ansprüche, wobei das Verfahren den folgenden Schritt umfasst:
- Entscheiden, anhand des Qualitätsindikators (QI) und/oder der Auswahl des Benutzers (B), ob eine Qualitätskontrolle (QM) der Leiterplatte (P) erfolgt.

8. Verfahren nach einem der vorangehenden Ansprüche, wobei das Verfahren den folgenden Schritt umfasst:
- Bestimmen, durch zumindest einen Sensor (S1, S2, S3) , von zumindest einem Umwelteinfluss, wobei das Bestimmen eine Bereitstellung durch den Sensor (S1,S2,S3) des zumindest einen Umwelteinflusses als Teil der Produktionsdaten (n1, ..., xn)

9. Verfahren nach einem der vorangehenden Ansprüche, wobei die Produktionsdaten (x1 ,..., xn)Position und Ausprägung eines Befestigungsmittels (BM), insbesondere eine Position und eine Menge einer aufgetragenen Lötpaste, oder Position und/oder Menge eines Isolationsmaterials umfassen.

10. Verfahren nach einem der vorangehenden Ansprüche, insbesondere nach einem der Ansprüche 4 oder 5, wobei der lernfähige Algorithmus (A) auf einem Decision-Tree, einem neuronalen Netz und/oder einem Support-Vector-Algorithmus basiert.

11. Verfahren nach einem der vorangehenden Ansprüche, insbesondere nach Anspruch 3, wobei die Qualitätskontrolle (QM) ein optisches oder Röntgen-optisches Verfahren und/oder eine elektrische Prüfung der Leiterplatte (P) umfasst.

12. Verfahren nach einem der vorangehenden Ansprüche, wobei mit Hilfe eines Konvertierungsmoduls (Par) Produktionsdaten (x1 ,..., xn)von einer Mehrzahl von unterschiedlichen Sensoren (S1, S2) auf einen Datentyp, insbesondere einen gemeinsamen Datentyp, wandelbar sind.

13. Verfahren nach einem der vorangehenden Ansprüche, wobei das Verfahren den folgenden Schritt umfasst:
- Anpassung, anhand des berechneten Qualitätsindikators , eines Produktionsschritts.

14. Computerprogrammprodukt zur Ausführung auf einer Vorrichtung zur Herstellung einer Leiterplatte, wobei die Vorrichtung eine Produktionseinheit oder mehrere Produktionseinheiten zur Herstellung der Leiterplatte, eine Recheneinheit zur Berechnung und/oder Bereitstellung eines Qualitätsindikators der jeweilig hergestellten Leiterplatte, und Datenerfassungsmittel zur Bereitstellung von Produktionsdaten für die Recheneinheit umfasst , wobei das Computerprogrammprodukt zur Ausführung eines Verfahrens nach einem der vorangehenden Ansprüche ausgebildet ist.

15. Vorrichtung zur Herstellung einer Leiterplatte (P), umfassend:
- eine Produktionseinheit (PE1, PE2, PE3) oder mehrere Produktionseinheiten (PE1, PE2, PE3) zur Herstellung der Leiterplatte (P),
- eine Recheneinheit (RE) zur Berechnung und/oder Bereitstellung eines Qualitätsindikators (QI) der jeweilig hergestellten Leiterplatte (P);
- Datenerfassungsmittel zur Bereitstellung von Produktionsdaten (x1 ,..., xn)für die Recheneinheit,
- wobei die die Vorrichtung angepasst ist, um das Verfahren von einem Verfahren gemäß einem der Ansprüche 1 bis 13 durchzuführen.

16. Vorrichtung nach Anspruch 15, wobei die Vorrichtung weiter eine Qualitätskontrolleinheit (QME) umfasst, wobei die Qualitätskontrolleinheit zur Bestimmung eines Qualitätsindex (QX) der jeweiligen Leiterplatte (P) ausgebildet ist.

17. Vorrichtung nach Anspruch 16, wobei die Recheneinheit (RE) und die Qualitätskontrolleinheit (QME) derart zusammenwirkend ausgebildet oder betreibbar sind, so dass der von der Recheneinheit (RE) bereitgestellte Qualitätsindikator (QI) und der von der Qualitätskontrolleinheit (QME) bereitgestellte Qualitätsindex (QX) denselben Wert annehmen.

18. Vorrichtung nach einem der Ansprüche 15 bis 17, wobei das jeweilige Datenerfassungsmittel als Sensor (S1, S2, S3) ausgebildet ist.

19. Vorrichtung nach einem der Ansprüche 15 bis 18, wobei die Recheneinheit (RE) dazu angepasst ist, mit einer weiteren Recheneinheit (CL), insbesondere einem dezentralen Server oder einer Cloud zu koppeln, wobei die weitere Recheneinheit (CL) zum Anlernen des lernfähigen Algorithmus (A) vorgesehen ist.

20. Vorrichtung nach einem der Ansprüche 15 bis 19, wobei die Vorrichtung zur Produktion der Leiterplatten mit Bauteilen angepasst ist, wobei die Produktionsdaten (x1 ,..., xn)zur Beschreibung eines Auftragens einer Lötpaste auf die Leiterplatte vorgesehen sind, wobei der Qualitätsindikator (QI) und/oder der Qualitätsindex (QX) zur Beschreibung einer ausreichenden Kontaktierung der Bauteile mit der Leiterplatte nach einem Lötprozess vorgesehen ist.

21. Vorrichtung nach einem der Ansprüche 15 bis 20, insbesondere nach Anspruch 17, wobei die Vorrichtung dazu angepasst ist, den Qualitätsindex (QI) der jeweiligen Leiterplatte (P) mit Hilfe der Qualitätskontrolleinheit (QME), insbesondere mittels eines optischen und/oder Röntgen-optischen Verfahrens, zu bestätigen.

22. Vorrichtung nach einem der Ansprüche 15 bis 21, wobei eine erste Produktionseinheit (PE1) zum Auftragen einer Lötpaste auf die Leiterplatte unter den Produktionseinheiten vorgesehen ist, wobei zumindest eine zweite Produktionseinheit (PE2) zur Bestückung der Leiterplatte mit Bauteilen unter den Produktionseinheiten vorgesehen ist, wobei eine dritte Produktionseinheit (PE3) unter den Produktionseinheiten vorgesehen ist und als Ofen ausgebildet ist, wobei der Ofen zur Ausbildung einer elektrischen Verbindung der Leiterplatte mit dem jeweiligen Bauteil mit Hilfe der Lötpaste angepasst ist.

23. Vorrichtung nach einem der Ansprüche 15 bis 22, wobei die Produktionseinheit zur Isolation eines elektrischen Leiters, insbesondere einer Wicklung für eine elektrische Maschine, ausgebildet ist, wobei der Qualitätsindex (QX) und/oder der Qualitätsindikator (QI) jeweils ein Maß für die Isolation des Leiters sind.

24. Vorrichtung nach einem der Ansprüche 15 bis 23,
- aufweisend eine erste Anzahl (a) an Produktionseinheiten (PE1, PE2, PE3) mit einer jeweilig maximalen Produktionskapazität einer zweiten Anzahl (b) von Leiterplatten (P) pro Zeiteinheit (t),
- aufweisend eine dritte Anzahl (c) an Qualitätskontrolleinheiten (QME) zur Bestimmung der jeweiligen Qualitätsindices (QX) der jeweiligen Leiterplatten (P),
- wobei eine Kontrollkapazität der dritten Anzahl (c) von Qualitätskontrolleinheiten (QME) pro Zeiteinheit (t) eine vierte Anzahl (d) bildet,
- wobei die Leiterplatte der ersten Anzahl (a) und der zweiten Anzahl (b) kleiner als die vierte Anzahl (d) ist.

## Claims

1. Method comprising the following steps:
- producing a circuit board (P) in a production step (P1, P2, P3) or in a plurality of production steps (P1, P2, P3);
- in each case, providing production data (x1, ..., xn) during at least one production step (P1, P2, P3); wherein the production data is the position of a solder paste on a circuit board, the deviation of the applied solder paste in relation to a target position or a target pattern, the thickness of the applied layer of the solder paste, and/or a temperature or an air humidity of the respective environment of the circuit board,
- calculating a quality indicator (QI) on the basis of the respective production data (x1, ..., xn), **characterised in that** the method comprises the following step:
- associating the quality indicator (QI) with the respective circuit board (P).

2. Method according to claim 1, wherein the method comprises the following step:
associating the respective quality indicator (QI) with the respective circuit board (P) with the aid of a database or
with the aid of a marking on the circuit board.

3. Method according to one of the preceding claims, wherein the method comprises the following steps:
- carrying out a quality control check after at least one production step (P1, P2, P3), and
- associating in each case a quality index (QX) during the quality control check (QM) of the respective circuit board (P) .

4. Method according to claim 3, wherein the method comprises the following step:
- determining the quality indicator (QI) with the aid of a learning-capable algorithm (A), wherein the learning-capable algorithm (A) is teachable by a comparison of production data (x1, ..., xn), the quality indices (QX) and optionally the respective quality indicator (QI).

5. Method according to one of the preceding claims, wherein the method comprises the following step:
- teaching the learning-capable algorithm (A) such that the respective quality indicator (QI) corresponds to the respective quality index (QX) of the respective circuit board (P) .

6. Method according to one of the preceding claims, wherein the method comprises the following steps:
- displaying the quality indicator (QI) and/or the quality index (QX) of the respective circuit board (P) to a user (B), and
- enabling the user to select what is to happen to the circuit board (P) on the basis of the quality indicator (QI).

7. Method according to one of the preceding claims, wherein the method comprises the following step:
- deciding whether a quality control check (QM) of the circuit board (P) is to take place on the basis of the quality indicator (QI) and/or the selection by the user (B).

8. Method according to one of the preceding claims, wherein the method comprises the following step:
- determining at least one environmental influence by way of at least one sensor (S1, S2, S3) wherein the determining includes the sensor (S1, S2, S3) providing the at least one environmental influence as a portion of the production data (n1, ..., xn).

9. Method according to one of the preceding claims, wherein the production data (x1, ..., xn) comprises the position and characteristic of a fastening means (BM), in particular, a position and a quantity of an applied solder paste or a position and/or quantity of an insulation material.

10. Method according to one of the preceding claims, in particular, one of claims 4 or 5, wherein the learning-capable algorithm (A) is based upon a decision tree, a neural network and/or a support vector analysis.

11. Method according to one of the preceding claims, in particular, claim 3, wherein the quality control check (QM) comprises an optical or an X-ray optical method and/or an electrical check of the circuit board (P).

12. Method according to one of the preceding claims, wherein with the aid of a conversion module (Par), production data (x1, ..., xn) from a plurality of different sensors (S1, S2) is convertible to a data type, in particular, a common data type.

13. Method according to one of the preceding claims, wherein the method comprises the following step:
- adapting a production step on the basis of the calculated quality indicator.

14. Computer program product for execution on an apparatus for producing a circuit board (P), wherein the apparatus comprises a production unit or a plurality of production units for producing the circuit board, a computing unit for calculating and/or providing a quality indicator of the respectively produced circuit board, and data acquisition means for providing production data for the computing unit, wherein the computer program product is configured for carrying out a method according to one of the preceding claims.

15. Apparatus for producing a circuit board (P), comprising:
- a production unit (PE1, PE2, PE3) or a plurality of production units (PE1, PE2, PE3) for producing the circuit board (P),
- a computing unit (RE) for calculating and/or providing a quality indicator (QI) of the respectively produced circuit board (P);
- a data acquisition means for providing production data (x1, ..., xn) for the computing unit,
- wherein the apparatus is adapted to carry out the method from a method according to one of claims 1 to 13.

16. Apparatus according to claim 15, wherein the apparatus further comprises a quality control unit (QME), wherein the quality control unit is configured for determining a quality index (QX) of the respective circuit board (P).

17. Apparatus according to claim 16, wherein the computing unit (RE) and the quality control unit (QME) are configured cooperative or are operable cooperatively such that the quality indicator (QI) provided by the computing unit (RE) and the quality index (QX) provided by the quality control unit (QME) assume the same value.

18. Apparatus according to one of claims 15 to 17, wherein the respective data acquisition means is configured as a sensor (S1, S2, S3).

19. Apparatus according to one of claims 15 to 18, wherein the computing unit (RE) is adapted to couple to a further computing unit (CL), in particular, a decentralised server or a cloud, wherein the further computing unit (CL) is provided for teaching the learning-capable algorithm (A).

20. Apparatus according to one of claims 15 to 19, wherein the apparatus is adapted to produce the circuit boards with components, wherein the production data (x1,..., xn) is provided to describe an application of a solder paste to the circuit board, wherein the quality indicator (QI) and/or the quality index (QX) is provided for describing an adequate contacting of the components with the circuit board after a soldering process.

21. Apparatus according to one of claims 15 to 20, in particular, claim 17, wherein the apparatus is adapted to confirm the quality index (QI) of the respective circuit board (P) with the aid of the quality control unit (QME), in particular, with an optical and/or X-ray optical method.

22. Apparatus according to one of claims 15 to 21, wherein a first production unit (PE1) is provided among the production units for applying a solder paste to the circuit board, wherein at least one second production unit (PE2) is provided among the production units for equipping the circuit board with components, wherein a third production unit (PE3) is provided among the production units and is configured as an oven, wherein the oven is adapted to form an electrical connection of the circuit board with the respective component with the aid of the solder paste.

23. Apparatus according to one of claims 15 to 22, wherein the production unit is configured for insulating an electrical conductor, in particular, a winding for an electric machine, wherein the quality index (QX) and/or the quality indicator (QI) are each a measure for the insulation of the conductor.

24. Apparatus according to one of claims 15 to 23,
- having a first quantity (a) of production units (PE1, PE2, PE3) with a respective maximum production capacity of a second quantity (b) of circuit boards (P) per time unit (t),
- having a third quantity (c) of quality control units (QME) for determining the respective quality indices (QX) of the respective circuit boards (P),
- wherein a monitoring capacity of the third quantity (c) of quality control units (QME) per time unit (t) forms a fourth quantity (d),
- wherein the circuit board of the first quantity (a) and the second quantity (b) is smaller than the fourth quantity (d).

## Revendications

1. Procédé, comprenant les stades suivants :
- production d'une plaquette (P) à circuit imprimé en un stade (P1, P2, P3) de production ou en plusieurs stades (P1, P2, P3) de production ;
- respectivement une mise à disposition de données (x1,..., xn) de production pendant au moins un stade (P1, P2, P3) de production ;
- dans lequel les données de production sont la position d'une pâte à souder sur une plaquette à circuit imprimé, l'écart de la pâte à souder déposée par rapport à une position de consigne ou à un tracé de consigne, l'épaisseur de la couche déposée de la pâte à souder et/ou une température ou une humidité de l'air de l'environnement respectif de la plaquette à circuit imprimé,
- calcul d'un indicateur (QI) de qualité sur la base des données (x1,..., xn) respectives de production, **caractérisé en ce que** le procédé comprend le stade suivant :
- attribution de l'indicateur (QI) de qualité à la plaquette (P) à circuit imprimé respective.

2. Procédé suivant la revendication 1, dans lequel le procédé comprend le stade suivant :
- affectation de l'indicateur (QI) de qualité respectif à la plaquette (P) à circuit imprimé respective à l'aide d'une base de données ou à l'aide d'un marquage sur la plaquette à circuit imprimé.

3. Procédé suivant l'une des revendications précédentes, dans lequel le procédé comprend les stades suivants :
- on effectue un contrôle de qualité après au moins un stade (P1, P2, P3) de production, et
- on affecte, lors du contrôle (QM) de qualité, respectivement un indice (QX) de qualité à la plaquette (P) à circuit imprimé respective.

4. Procédé suivant la revendication 3, dans lequel le procédé comprend le stade suivant :
- on détermine l'indicateur (QI) de qualité à l'aide d'un algorithme (A) pouvant subir un apprentissage, l'algorithme (A) pouvant subir un apprentissage par comparaison de données (x1,..., xn) de production, des indices (QX) de qualité et éventuellement de l'indicateur (QI) respectif de qualité.

5. Procédé suivant l'une des revendications précédentes, dans lequel le procédé comprend le stade suivant :
- apprentissage de l'algorithme (A) pouvant subir un apprentissage, de manière à ce que l'indicateur (QI) respectif de qualité corresponde à l'indice (QX) respectif de qualité de la plaquette (P) à circuit imprimé respective.

6. Procédé suivant l'une des revendications précédentes, dans lequel le procédé comprend les stades suivants :
- affichage pour un utilisateur (B) de l'indicateur (QI) de qualité et/ou de l'indice (QX) de qualité de la plaquette (P) à circuit imprimé respective, et
- possibilité pour l'utilisateur de choisir, à l'aide de l'indicateur (QI) de qualité, ce qui se passe avec la plaquette (P) à circuit imprimé.

7. Procédé suivant l'une des revendications précédentes, dans lequel le procédé comprend le stade suivant :
- décision, à l'aide de l'indicateur (QI) de qualité et/ou du choix de l'utilisateur (B), si un contrôle (QM) de qualité de la plaque (P) à circuit imprimé est couronné de succès.

8. Procédé suivant l'une des revendications précédentes, dans lequel le procédé comprend le stade suivant :
- détermination, par au moins un capteur (S1, S2, S3) d'au moins une influence de l'environnement, la détermination comprenant la mise à disposition par le capteur (S1, S2, S3) d'au moins une influence de l'environnement comme partie des données (n1, ..., xn) de production.

9. Procédé suivant l'une des revendications précédentes, dans lequel les données (x1,..., xn) de production comprennent une position et une empreinte d'un moyen (BM) de fixation, notamment une position et une quantité de pâte à souder déposée ou une position et/ou une quantité d'un matériau isolant.

10. Procédé suivant l'une des revendications précédentes, notamment suivant l'une des revendications 4 ou 5, dans lequel l'algorithme (A) pouvant subir un apprentissage repose sur un arbre de décision, sur un réseau neuronal et/ou sur un algorithme support - vector.

11. Procédé suivant l'une des revendications précédentes, notamment suivant la revendication 3, dans lequel le contrôle (QM) de qualité comprend un procédé d'optique ou d'optique de rayons X et/ou un contrôle électrique de la plaquette (P) à circuit imprimé.

12. Procédé suivant l'une des revendications précédentes, dans lequel, à l'aide d'un module (Par) de transformation, des données (x1,..., xn) de production peuvent être transformées par une pluralité de capteurs (S1, S2) différents en un type de données, notamment en un type de données commun.

13. Procédé suivant l'une des revendications précédentes, dans lequel le procédé comprend le stade suivant :
- adaptation d'un stade de production à l'aide de l'indicateur de qualité calculée.

14. Produit de programme d'ordinateur à réaliser sur une installation de production d'une plaquette à circuit imprimé, l'installation comprenant une unité de production ou plusieurs unités de production pour la fabrication de la plaquette à circuit imprimé, une unité de calcul pour le calcul et/ou pour disposer d'un indicateur de qualité de la plaquette à circuit imprimé fabriquée respectivement et des moyens de saisie de données, pour mettre des données de production à la disposition de l'unité de calcul, dans lequel le produit de programme d'ordinateur est constitué pour l'exécution d'un procédé suivant l'une des revendications précédentes.

15. Installation de fabrication d'une plaquette (P) à circuit imprimé, comprenant :
- une unité (PE1, PE2, PE3) de production ou plusieurs unités (PE1, PE2, PE3) de production pour la fabrication de la plaquette (P) à circuit imprimé,
- une unité (RE) de calcul pour le calcul d'un indicateur (QI) de qualité de la plaquette (P) à circuit imprimé fabriquée respectivement et/ou pour disposer d'un tel indicateur ;
- des moyens de saisie de données pour mettre des données (x1, ..., xn) de production à la disposition de l'unité de calcul,
- dans laquelle l'installation est adaptée pour effectuer le procédé suivant l'une des revendications 1 à 13.

16. Installation suivant la revendication 15, dans laquelle l'installation comprend en outre une unité (QME) de contrôle de qualité, dans laquelle l'unité de contrôle de qualité est constituée pour la détermination d'un indice (QX) de qualité de la plaquette (P) à circuit imprimé respective.

17. Installation suivant la revendication 16, dans laquelle l'unité (RE) de calcul et l'unité (QME) de contrôle de qualité sont constituées ou peuvent fonctionner pour coopérer de manière à ce que l'indicateur (QI) de qualité, mis à disposition par l'unité (RE) de calcul, et l'indice (QX) de qualité, mis à disposition par l'unité (QME) de contrôle de qualité, prennent la même valeur.

18. Installation suivant l'une des revendications 15 à 17, dans laquelle les moyens respectifs de saisie de données sont constitués sous la forme d'un capteur (S1, S2, S3).

19. Installation suivant l'une des revendications 15 à 18, dans laquelle l'unité (RE) de calcul est adaptée pour être connectée à une autre unité (CL) de calcul, notamment à un serveur décentralisé ou à un nuage, l'autre unité (CL) de calcul étant prévue pour faire subir un apprentissage à l'algorithme (A) pouvant subir un apprentissage.

20. Installation suivant l'une des revendications 15 à 19, dans laquelle l'installation est adaptée à la production des plaquettes à circuit imprimé ayant des composants, dans laquelle les données (x1,..., xn) de production sont prévues pour la description d'un dépôt d'une pâte à souder sur la plaquette à circuit imprimé, dans laquelle l'indicateur (QI) de qualité et/ou l'indice (QX) de qualité est prévu pour la description d'un contact suffisant des composants avec la plaquette à circuit imprimé après une opération de soudure.

21. Installation suivant l'une des revendications 15 à 20, notamment suivant la revendication 17, dans laquelle l'installation est adaptée pour confirmer l'indice (QI) de qualité de la plaquette (P) à circuit imprimé respective à l'aide de l'unité (QME) de contrôle de qualité, notamment au moyen d'un procédé optique et/ou d'optique de rayons X

22. Installation suivant l'une des revendications 15 à 21, dans laquelle il est prévu, parmi les unités de production, une première unité (PE1) de production pour le dépôt d'une pâte à souder sur la plaquette à circuit imprimé, dans lequel il est prévu, parmi les unités production, au moins une deuxième unité (PE2) de production pour l'implantation de composants dans la plaquette à circuit imprimé, dans laquelle il est prévu, parmi les unités de production, une troisième unité (PE3) de production, qui est constituée en four, dans laquelle le four est adapté à la constitution d'une liaison électrique de la plaquette à circuit imprimé avec le composant respectif à l'aide de la pâte à souder.

23. Installation suivant l'une des revendications 15 à 22, dans laquelle l'unité de production est constituée pour l'isolation d'un conducteur électrique, notamment d'un enroulement d'une machine électrique, l'indice (QX) de qualité et/ou l'indicateur (QI) de qualité étant respectivement une mesure de l'isolation.

24. Installation suivant l'une des revendications 15 à 23,
- comportant un premier nombre (a) d'unités (PE1, PE2, PE3) de production ayant une capacité de production maximum respective d'un deuxième nombre (b) de plaquettes (P) à circuit imprimé par unité (t) de temps,
- comprenant un troisième nombre (c) d'unités (QME) de contrôle de qualité pour la détermination des indices (QX) de qualité respectifs des plaquettes (P) à circuit imprimé respectives,
- dans laquelle une capacité de contrôle du troisième nombre (c) d'unités (QME) de contrôle de qualité par unité (t) de temps forme un quatrième nombre (d),
- dans laquelle la plaquette à circuit imprimé est le premier nombre (a) et le deuxième nombre (b) est plus petit que le quatrième nombre (d).
